(19) Europäisches Patentamt

European Patent Office

Office européen des brevets

(11) **EP 0 802 441 B1**

(12) **EUROPÄISCHE PATENTSCHRIFT**

(45) Veröffentlichungstag und Bekanntmachung des Hinweises auf die Patenterteilung:
**11.05.2005 Patentblatt 2005/19**

(51) Int Cl.$^7$: **G02C 7/02**

(21) Anmeldenummer: **97104911.9**

(22) Anmeldetag: **22.03.1997**

(54) **Multifokale Brillenlinse**

Multifocal spectacle glass

Lentille de lunettes multifocale

(84) Benannte Vertragsstaaten:
**AT CH DE ES FR GB IT LI NL SE**

(30) Priorität: **28.03.1996 DE 19612284**

(43) Veröffentlichungstag der Anmeldung:
**22.10.1997 Patentblatt 1997/43**

(73) Patentinhaber: **Carl Zeiss AG**
**73447 Oberkochen (DE)**

(72) Erfinder:
• **Kelch, Gerhard**
**73431 Aalen (DE)**

• **Lahres, Hans**
**73433 Aalen-Wasseralfingen (DE)**
• **Saur, Konrad**
**73432 Aalen-Waldhausen (DE)**
• **Wietschorke, Helmut**
**73433 Aalen-Wasseralfingen (DE)**

(56) Entgegenhaltungen:
**EP-A- 0 039 497       EP-A- 0 562 336**
**GB-A- 2 261 527**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft eine multifokale Brillenlinse mit gebietsweise gleitendem Brechwert nach dem Oberbegriff des ersten Patentanspruchs.

Solche Brillenlinsen werden allgemein auch als Gleitsichtlinsen bezeichnet (z.B. EP 0 562 336 oder EP 0 452 802). Diejenige Fläche der Brillenlinse, welche den gewünschten gleitenden Brechwertverlauf der Linse bewirkt, heißt auch Gleitsichtfläche.

Zur Berechnung der Gleitsichtlinse wird eine Gebrauchssituation festgelegt. Eine solche ist zum Beispiel in DIN 58 208 Teil 2 im Bild 6 angegeben.

Für die Objektabstände verwenden wir die Vorgaben aus der DIN 58 208, es sei also im Nahbezugspunkt die Objektentfernung a = -380 mm für alle Additionen <= 2,50 dpt und a = -1000 mm dpt/Addition für alle Additionen >2,50 dpt.

Der Drehpunktscheitelabstand b' vom augenseitigen Scheitel der Gleitsichtlinse zum optischen Augendrehpunkt Z' wird bei der Fehlsichtigkeit 0,00 dpt zu 28 mm angenommen. Die Baulänge des Auges und die Fehlsichtigkeit hängen statistisch voneinander ab. Kurzsichtige Augen sind länger, weitsichtige Augen kürzer gebaut. Daher gilt näherungsweise b'= 28,0 - 0,2 x mittlere Fernteilwirkung. Die Fassung ist bei Gleitsichtbrillen in der Regel vorgeneigt, so daß die eingeschliffene Gleitsichtlinse um im Mittel etwa 9° zur Lotrechten geneigt ist. Damit ist die relative Lage der Gleitsichtlinse zum Auge festgelegt. In dieser Gebrauchssituation können alle Strahlrechnungen brillenträgerrichtig durchgeführt werden, also genau so, wie sie auch beim Tragen der Brillenlinse vor dem Auge des Brillenträgers auftreten.

Gleitsichtlinsen sind seit vielen Jahren bekannt und werden von mehreren Herstellern angeboten. Als Beispiel sei die unter der Bezeichnung "Gradal HS" angebotene Gleitsichtlinse der Anmelderin genannt, die in der DE-PS 30 16 935 (EP-A-0 039 497) beschrieben ist.

An eine universell einsetzbare Gleitsichtlinse werden viele Forderungen gestellt: Die Fernsichtzone soll möglichst geringe sphärische und astigmatische Abweichungen für den Brillenträger aufweisen (da beim Blick in die Ferne eine möglichst hohe Sehschärfe gefordert wird), die Nahsichtzone soll genügend hoch liegen, damit keine zu starken, unnatürlichen Blicksenkungen für die Nähe notwendig werden und ihr nutzbarer Bereich soll genügend breit sein.

Der Bereich in der Progressionszone beidseits der Hauptblicklinie, in dem deutliches Sehen möglich ist, wird auch als Progressionskanal bezeichnet. Diesen Progressionskanal wünscht sich der Brillenträger möglichst breit, um beim Blick auf Objekte in mittleren Entfernungen nicht immer zu Kopfbewegungen gezwungen zu sein. Die Akzeptanz jeder Gleitsichtlinse hängt wesentlich von dieser Breite ab.

Zu diesen monokularen Forderungen kommen zusätzlich solche bezüglich des Binokularsehens. Wenn man sich die optimale Korrektion des Brillenträgers als Ziel gesetzt hat, dann muß den binokularen Eigenschaften des Glases besondere Aufmerksamkeit geschenkt werden.

Das binokulare Sehen entsteht aus dem Zusammenwirken des Augenpaares. Binokulare Brillenglas-Eigenschaften sind deshalb Eigenschaften des Gläserpaares.

Die Forderung nach binokularem Gleichgewicht für das Augenpaar verlangt die Gleichwertigkeit des Gläserpaares. Diese Gleichwertigkeit muß für jede Blickrichtung gegeben sein und ist zu beziehen auf die Abbildungsgüte und auf die prismatische Richtungsumlenkung.

Gleichwertige Abbildungsgüte ermöglicht gleichen Visus rechts und links, gleichwertige prismatische Richtungsumlenkung sorgt bei der Betrachtung eines Objektpunktes (im direkten Sehen) für ungestörte Fusion und bei der Wahrnehmung des Objektumfeldes (im indirekten Sehen) für gewohnte Tiefenwahrnehmung.

Alle diese monokularen und binokularen Forderungen sollen möglichst bei allen vorkommenden dioptrischen Wirkungen und bei allen vorkommenden Additionen so gut wie möglich erfüllt sein.

Ein gewisser Mangel aller Gleitsichtlinsen besteht darin, daß vor allem in der Progressionszone seitlich der Hauptblicklinie astigmatische Abweichungen, welche ein deutliches Sehen verhindern, unvermeidbar sind.

Es ist somit die Aufgabe der Erfindung eine multifokale Brillenlinse zu schaffen, deren Progressionskanal möglichst breit ist und die seitlichen Bildfehler auf dieser Brillenlinse zu verringern, ohne daß die monokularen und binokularen Anforderungen an Schärfe und Verträglichkeit merkbar beeinträchtigt werden.

Diese Aufgabe wird erfindungsgemäß durch eine Gleitsichtlinse gelöst, welche die im kennzeichnenden Teil des ersten Patentanspruchs angeführte Merkmalskombination erfüllt.

Im Prinzip sind alle bekannten Gleitsichtlinsen Kompromißlösungen, bei welchen die unvermeidbaren Fehler (Sehschärfenminderung, Verzeichnung, binokulare Ungleichgewichte) so verteilt werden, daß die "wichtigen" Sehbereiche (Ferne, Progressionszone, Nähe) gut nutzbar sind.

Das System Auge-Gehirn toleriert die oben genannten Abbildungsfehler in gewissen Grenzen. Diese Grenzen sind unterschiedlich in Abhängigkeit von Objektentfernung und Blickrichtung.

Bezüglich der binokularen Gleichgewichte kann die in der DE-PS 30 16 935 (EP-A-0 039 497) beschriebene Gleitsichtlinse als ein gelungener Kompromiß angesehen werden.

Das besondere Kennzeichen der erfindungsgemäßen multifokalen Brillenlinse ist die für den Brillenträger optimal ausgewogene Kombination der wichtigsten Eigenschaften einer Gleitsichtlinse: eine außergewöhnliche Breite des Progressionskanals mit einem sanften Anstieg des Astigmatismus seitlich des Progressionskanals, und einem harmonischen, nicht zu starken Abfall der mittleren Wirkung seitlich des Progressionskanals und des Nahteils. Außerdem besitzt sie eine konvergenzrichtige Lage des gesamten Progressionskanals. Diese Verbesserungen werden im gesamten angegebenen Additionsbereich und bei allen sphärischen und astigmatischen Fernteilwirkungen des beanspruchten Bereichs erzielt.

Die erfindungsgemäße Kombination der Merkmale definiert so eine multifokale Brillenlinse mit höchster Tragequalität.

Besonders vorteilhaft wirkt sich die Erfindung bei kurzen Progressionszonen aus, wobei ein geringer Maximalwert für die astigmatischen Abweichungen in den mittleren Bereichen des Brillenglases vorteilhaft ist.

Weitere vorteilhafte Ausgestaltungen der Erfindung sind in den Unteransprüchen gegeben und werden im folgenden Text noch näher erläutert.

Die Erfindung wird im folgenden in beispielhafter Weise anhand von Zeichnungen erläutert, wobei weitere wesentliche Merkmale sowie dem besseren Verständnis dienende Erläuterungen und Ausgestaltungsmöglichkeiten des Erfindungsgedankens beschrieben sind.

Dabei zeigen:

Figur 1    die astigmatischen Abweichungen einer erfindungsgemäßen Gleitsichtlinse mit der Fernteilwirkung 0,00 dpt und der Addition 2,00 dpt in der mittleren Gebrauchssituation;

Figur 2    die Zunahme der mittleren Wirkung einer erfindungsgemäßen Gleitsichtlinse mit der Fernteilwirkung 0,00 dpt und der Addition 2,00 dpt in der mittleren Gebrauchssituation. Die Hauptblicklinie (1) wird an der Stelle von der waagrechten Linie (2) geschnitten, an der die Wirkungszunahme gerade 1,00 dpt beträgt. Unter der Linie (2) ist die mittlere Wirkung überall um mehr als 0,60 dpt größer als im Fernbezugspunkt;

Figur 3a    die Pfeilhöhen des oberen Teils der Vorderfläche der Gleitsichtlinse, die den Berechnungen für die Fig. 1 und 2 zugrunde liegt;

Figur 3b    die Pfeilhöhen des unteren Teils der Vorderfläche der Gleitsichtlinse, die den Berechnungen für die Fig. 1 und 2 zugrunde liegt;

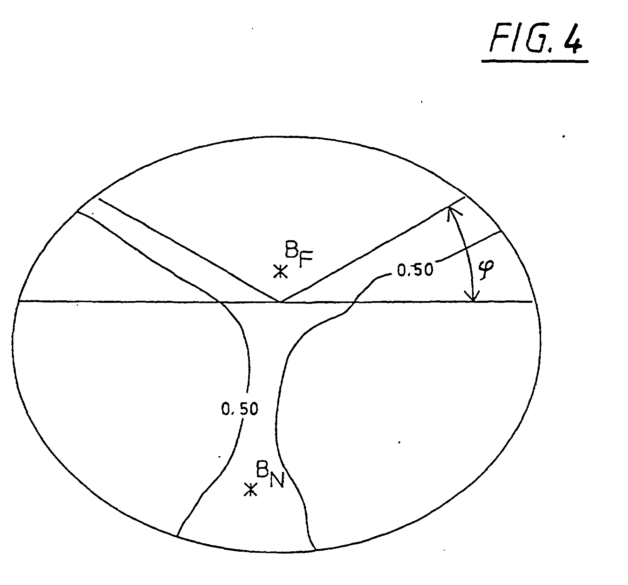

Figur 4    zeigt die Abgrenzung des Bereichs im Fernsichtbereich, in welchem die astigmatischen Abweichungen klein gehalten werden;

Figur 5    eine Gleitsichtlinse mit (1) Fernsichtzone, (2) Progressionszone, (3) Nahsichtzone, (4) Hauptblicklinie und (5) Zentrierkreuz; und

Figur 6    eine bekannte Gleitsichtlinse in einer mittleren Gebrauchssituation vor dem Auge mit dem optischen Augendrehpunkt Z' und dem Drehpunktscheitelabstand b'.

Die in den Figuren dargestellte Gleitsichtlinse besitzt in ihrem oberen Teil eine Fernsichtzone und in ihrem unteren Teil eine Nahsichtzone. Zwischen diesen beiden Zonen liegt die Progressionszone.

Im folgenden bezeichnet stH den absolut stärksten Hauptschnitt der Wirkung im Fernbezugspunkt für den Brillenträger. Dabei haben die Brillenlinsen in einer Fassung eine Vorneigung von 9 Grad. Der Abstand der augenseitigen Fläche der Brillenlinse vom optischen Augendrehpunkt beträgt dabei 28 - 0.2* mittlerer Wirkung (mm).

Läßt der Benutzer einer solchen Brillenlinse den Blick geradeaus von oben nach unten wandern, so bestimmt der vorgegebene Brechwertverlauf zu jeder Neigung des Blicks die Entfernung des scharf abgebildeten Objektes. Zu jeder Objektentfernung gehört eine entsprechende Einwärtsbewegung des Augenpaares.

Deshalb durchdringen die Sehstrahlen jedes Auges bei der beschriebenen Blickbewegung die Gleitsichtfläche längs einer ganz bestimmten Linie, der Hauptblicklinie. Diese ist also eine zur Nase hin geschwungene Kurve auf der Gleitsichtfläche. Sie teilt diese Fläche in einen nasalen und einen temporalen Bereich.

Die Gleitsichtlinse besitzt einen Fernbezugspunkt, in welchem die für das Sehen in die Ferne ermittelte dioptrische Wirkung (Sphäre, Zylinder, Achse) verwirklicht ist und einen Nahbezugspunkt, in welchem die für ein komfortables Nahsehen notwendige Wirkung vorhanden ist.

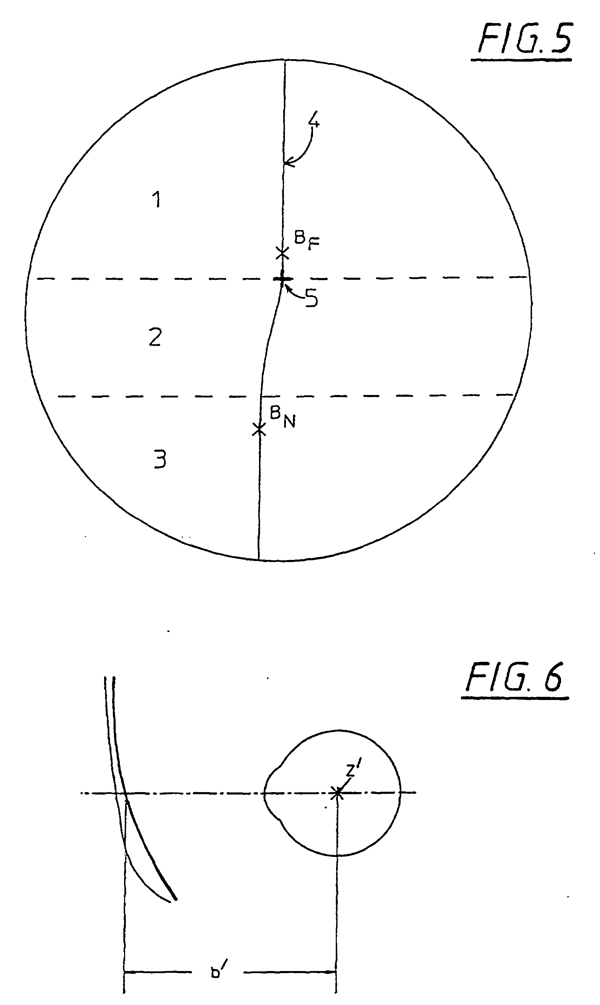

Gleitsichtlinsen werden in der Regel mit einem aufgestempelten Kreuz, dem sogenannten Zentrierkreuz ausgeliefert. Dieses liegt vorzugsweise 3 mm senkrecht unterhalb des Fernbezugspunktes. Der Augenoptiker schleift dann die Gleitsichtlinse so in die Brillenfassung ein, daß das Zentrierkreuz vor der Pupillenmitte beim geradeaus blickenden Auge sitzt (siehe Fig. 5).

Die Gleitsichtlinse ist in der Regel mit einem sogenannten Dickenreduktionsprisma versehen, dessen Größe von der Addition abhängt und dessen Basislage 270° beträgt. Vorzugsweise wird bei der Bestimmung der zu verwendenden Werte folgende Tabelle verwendet:

| Add (dpt) | 1,00 | 1,25 | 1,50u. 1,75 | 2,0 | 2,25u. 2,50 | 2,75 | 3,00 |
|---|---|---|---|---|---|---|---|
| Prisma (cm/m) | 0,50 | 0,75 | 1,00 | 1,25 | 1,50 | 1,75 | 2,00 |

Dieses Prisma dient nicht zur Korrektion einer Winkelfehlsichtigkeit, sondern soll dafür sorgen, daß die Randdicken oben und unten annähernd gleich werden.

Die Erfindung beschränkt sich auf multifokale Brillenlinsen, deren sphärische Wirkung im Fernbezugspunkt zwischen -4,00 dpt und +4,00 dpt und deren astigmatische Wirkung (Zylinder) zwischen 0,00 dpt und +4,00 dpt liegt. Außerdem darf keiner der beiden Hauptschnitte dem Betrag nach größer als 4,00 dpt sein. Die Achslage des Zylinders kann zwischen 0 und 180 Grad liegen.

Der Bereich der Addition reicht von 1,00 dpt bis 3,00 dpt. Die Addition ist hier gemäß ISO/DIS 8980-2 Ziff. 5.1.1 im brillenträgerrichtigen Strahlengang (as-worn position) gewählt.

Mindestens eine der beiden Flächen der Gleitsichtlinse ist eine asphärische Fläche, die mindestens zweimal stetig differenzierbar ist und die in ihrem oberen Teil eine Fernsichtzone, im unteren Teil eine Nahsichtzone und dazwischen eine Progressionszone enthält.

Der Abstand vom Fernbezugspunkt zum Nahbezugspunkt beträgt höchstens 21 mm. Der Nahbezugspunkt liegt dabei idealerweise auf der Hauptblicklinie, um die Konvergenz des Augenpaares für nahe Objekte zu berücksichtigen, wird aber vorzugsweise bei allen Wirkungen und Additionen einheitlich um 2,5 mm nasal versetzt, um eine einheitliche Lage des Meßpunktes für die Nahmeßwerte zu haben (siehe Fig. 5).

Die Breite des Progessionskanals hängt wesentlich von der Länge der Progressionszone ab.

Eine zu lange Progressionszone schiebt die Nahsichtzone zu weit nach unten, so daß sie nicht mehr in bequemer Kopf- und Körperhaltung benutzbar ist, und eine zu kurze Progressionszone engt den Progressionskanal unnötig ein.

Erfindungsgemäß entsteht ein Optimum, wenn auf einer Länge von maximal 11 mm entlang der Hauptblicklinie die Wirkung um 75 % der Addition im wesentlichen linear ansteigt. Der lineare Anstieg bewirkt, daß der Progressionskanal gleichmäßig breit bleibt und keine Engstellen entstehen.

Die Breite des Progressionskanals, also des Bereichs mit deutlichem Sehen, wird ist durch den Bereich gegeben, in welchem die astigmatische Abweichung kleiner als 0,75 dpt ist. Eine solche astigmatische Abweichung vermindert zwar etwas die Sehschärfe, aber nur so, daß bei den allermeisten Sehaufgaben keine Beeinträchtigung empfunden wird. Es ist bekannt, daß z.B. zum Lesen von Zeitungsdruck ein Visus von 0,5 ausreichend ist. Die Mindestbreite des Progressionskanals ist abhängig von der Addition (ADD) und der Wirkung im stärkeren Hauptschnitt im Fernbezugspunkt (stH).

Die Verträglichkeit einer Gleitsichtlinse hängt unter anderem von der maximalen astigmatischen Abweichung in den seitlichen Bereichen ab.

Je größer diese astigmatische Abweichung ist, um so stärker fühlt sich der Brillenträger beim Umherblicken gestört. Dies hängt sowohl mit den dadurch verursachten Unschärfen als auch mit den damit induzierten Schaukelbewegungen zusammen.

Die vorteilhaften Werte für die minimale Breite der nutzbaren Progressionszone (astigmatische Abweichungen kleiner als 0.75 dpt) sind aus der nachfolgenden Tabelle zu entnehmen:

| stH/ADD | 1.0 | 1,25 | 1,50 | 1,75 | 2,00 | 2,25 | 2,50 | 2,75 | 3,00 |
|---|---|---|---|---|---|---|---|---|---|
| -4,00 | 15,1 | 10,8 | 7,9 | 5,9 | 4,7 | 4,1 | 3,8 | 3,5 | 3,0 |
| -3,00 | 14,9 | 10,7 | 7,8 | 5,9 | 4,7 | 4,1 | 3,8 | 3,5 | 3,0 |
| -2,00 | 14,3 | 10,4 | 7,6 | 5,8 | 4,7 | 4,1 | 3,8 | 3,5 | 3,0 |
| -1,00 | 13,3 | 9,8 | 7,4 | 5,7 | 4,7 | 4,1 | 3,8 | 3,5 | 3,0 |
| .00 | 12,2 | 9,2 | 7,1 | 5,6 | 4,7 | 4,1 | 3,8 | 3,4 | 3,0 |
| +1,00 | 11.0 | 8,5 | 6,7 | 5,5 | 4,6 | 4,1 | 3,7 | 3,3 | 2,9 |
| +2,00 | 9,8 | 7,8 | 6,4 | 5,3 | 4,5 | 4,0 | 3,6 | 3,2 | 2,7 |
| +3,00 | 8,9 | 7,3 | 6,0 | 5,1 | 4,4 | 3,9 | 3,4 | 3,0 | 2,6 |

(fortgesetzt)

| stH/ADD | 1.0 | 1,25 | 1,50 | 1,75 | 2,00 | 2,25 | 2,50 | 2,75 | 3,00 |
|---|---|---|---|---|---|---|---|---|---|
| +4,00 | 8,3 | 6,8 | 5,7 | 4,8 | 4,2 | 3,7 | 3,3 | 2,9 | 2,5 |

Es ist vorteilhaft, die maximalen astigmatischen Abweichungen möglichst klein zu halten. Erfindungsgemäß führt dies zu Werten, die wiederum eine Abhängigkeit von der Addition zeigen.

Diese Werte werden nur in dem Bereich der Gleitsichtlinse beschränkt, durch den nicht nur ganz selten geblickt wird.

Dieser Bereich wird durch eine Ellipse mit einer Ausdehnung von 50 mm in der Horizontalen und von 40 mm in der Vertikalen beschrieben, und zwar um einen Punkt, der 4 mm senkrecht unter dem Zentrierkreuz liegt. Außerhalb dieser Ellipse liegen nur Punkte, die entweder beim Einschleifen in die Fassung weggeschliffen werden oder beim direkten Sehen äußerst selten benützt werden.

Durch den Wirkungsanstieg und wegen der Forderung nach möglichst kleinen astigmatischen Abweichungen in den Seitenbereichen fällt die mittlere Wirkung im unteren Bereich der Gleitsichtlinse zur Seite hin ab. Dies würde die Breite des nutzbaren Nahbereichs einschränken und zu Schaukelbewegungen führen.

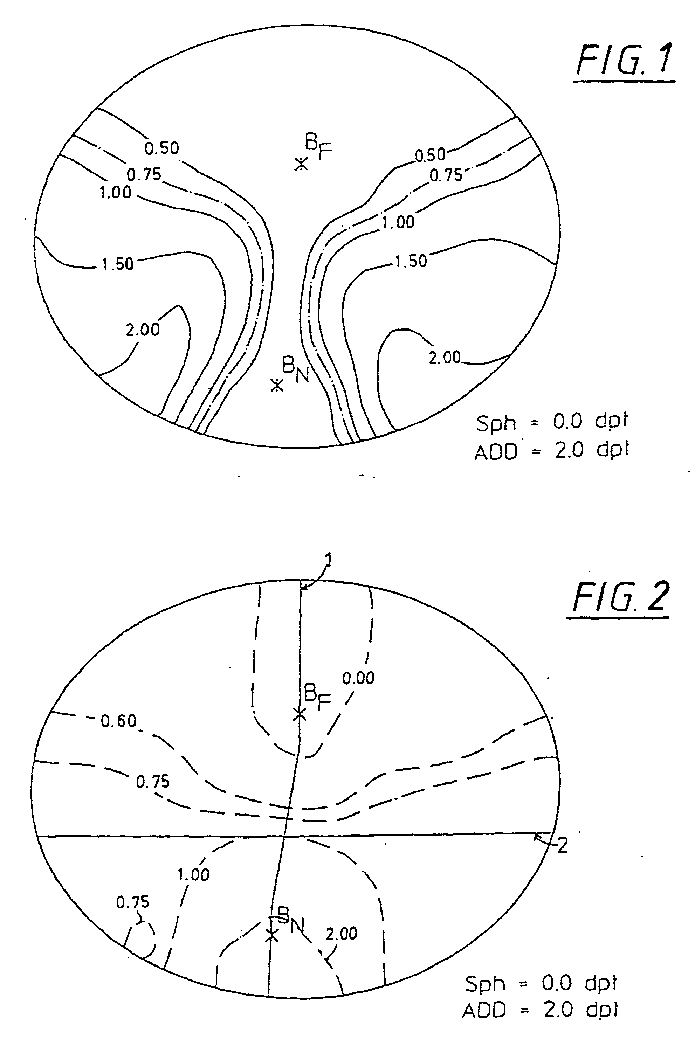

Diese Nachteile werden deutlich verringert, indem man erfindungsgemäß dafür sorgt, daß die mittlere Wirkung einen von der Addition abhängigen Grenzwert nicht unterschreitet (siehe hierzu Fig. 2).

Es hat sich gezeigt, daß alle diese Eigenschaften, die einen bisher noch nirgends erreichten optimalen Ausgleich zwischen zunächst widersprüchlich erscheinenden Forderungen darstellen, in einer Gleitsichtlinse verwirklicht werden können, indem mit den bekannten Verfahren zur Flächendarstellung und Optimierung gearbeitet wird.

Eine vorteilhafte Ausgestaltung des Erfindungsgedankens erreicht man, wenn in den bezüglich des binokularen Sehens korrespondierenden Durchblickpunkten dafür gesorgt wird, daß sphärische und astigmatische Abweichungen annähernd die gleichen Werte aufweisen. Es wurde in internen Trageversuchen gefunden, daß der Brillenträger es als angenehm empfindet, wenn rechtes und linkes Auge gleichwertige Seheindrücke haben.

Weiterhin ist es für eine gute Verträglichkeit der Brillenlinsen vor den Augen des Brillenträgers vorteilhaft, wenn in dem durch die oben genannte Ellipse begrenzten Bereich das binokulare Sehen möglichst wenig beeinträchtigt wird.

Dies kann erreicht werden, indem die vertikalen Richtungsdifferenzen unter 0,5 cm/m gehalten werden. Dann wird das Augenpaar nicht zu unnatürlichen motorischen Fusionsbewegungen gezwungen und es werden Doppelbilder vermieden. Der Wert von 0,5 cm/m ist z.B. in der RAL-RG 915 als zulässige prismatische Abweichung für das binokulare Sehen angegeben.

Vorteilhaft ist es weiterhin dafür zu sorgen, daß bei seitlichem Blick in der Fernsichtzone die Objekte deutlich wahrgenommen werden können.

Dazu werden die astigmatischen Abweichungen in Abhängigkeit von der Addition begrenzt. Bei kleinen Additionen können die Einschränkungen sehr klein gehalten werden; bei größeren Additionen ist es vorteilhaft, etwas größere Einschränkungen in Kauf zu nehmen, um die übrigen Forderungen nicht merkbar zu beeinträchtigen.

Die Einschränkungen sind dabei von einer Größenordnung, die vom Brillenträger nach einer Eingewöhnungszeit nicht mehr als störend empfunden werden.

Eine weitere vorteilhafte Ausgestaltung besteht darin, längs der Hauptblicklinie eine solche astigmatische Abweichung zuzulassen, die das deutliche Sehen nicht merkbar beeinträchtigt.

Dies ist sicher der Fall, wenn nicht mehr als 0,5 dpt astigmatische Abweichung zugelassen wird. Dadurch entstehen Freiheitsgrade für die Minimierung der übrigen Abbildungsfehler.

Ebenfalls vorteilhaft kann es sein, bei objektseitiger Lage der Gleitsichtfläche diese so zu gestalten, daß Schnitte von Horizontalebenen mit der Gleitsichtfläche im oberen Teil der Progressionszone Kurven bilden, deren Krümmungen zur Seite hin zunächst merklich zu- und dann wieder abnehmen. Bei augenseitiger Lage der Gleitsichtflächen nehmen in entsprechender Weise die Krümmungen zunächst merklich ab und dann wieder zu. Diese Eigenschaft erleichtert die optimale Erfüllung aller gestellten Forderungen.

Bei der Messung von Gleitsichtlinsen in Scheitelbrechwertmeßgeräten lassen sich die Meßwerte um so leichter und genauer ablesen, je geringer die sphärischen und astigmatischen Abweichungen innerhalb der Meßkreise variieren.

Im Fernmeßkreis wird üblicherweise mit einem Bündeldurchmesser von etwa 7 mm, im Nahmeßkreis mit einem Bündeldurchmesser von etwa 4 mm gemessen.

Bezüglich der sphärischen Abweichungen im Nahmeßkreis hat die multifokalen Brillenlinse eine vorteilhafte Ausgestaltung, wenn die vorgeschriebene Nahwirkung bereits 1mm oberhalb des Nahmeßpunktes erreicht wird. Damit bleiben die sphärischen Abweichungen innerhalb des Nahmeßkreises gering.

Ein erfindungsgemäßes Beispiel ist in Fig. 1 bis 3 dargestellt. Die Fernwirkung ist dabei 0,00 dpt und die Addition ist 2,00 dpt. Das Material hat die Brechzahl 1,600, die Mittendicke ist 2,5 mm und das Dickenreduktionsprisma ist 1,25 cm/m mit Basis 270°.

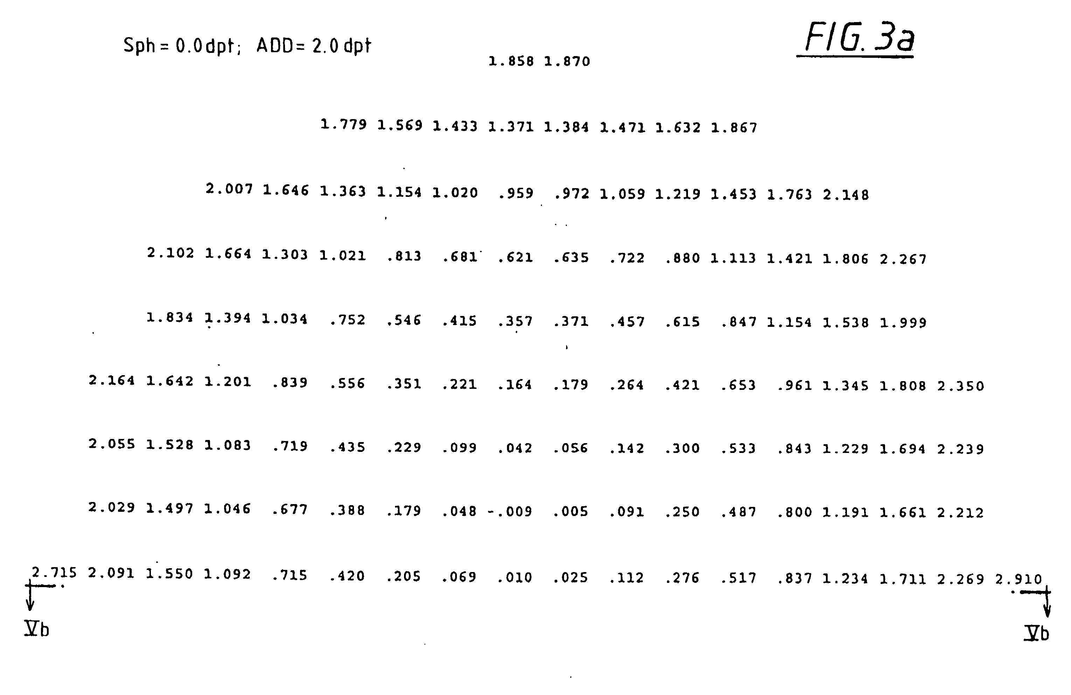

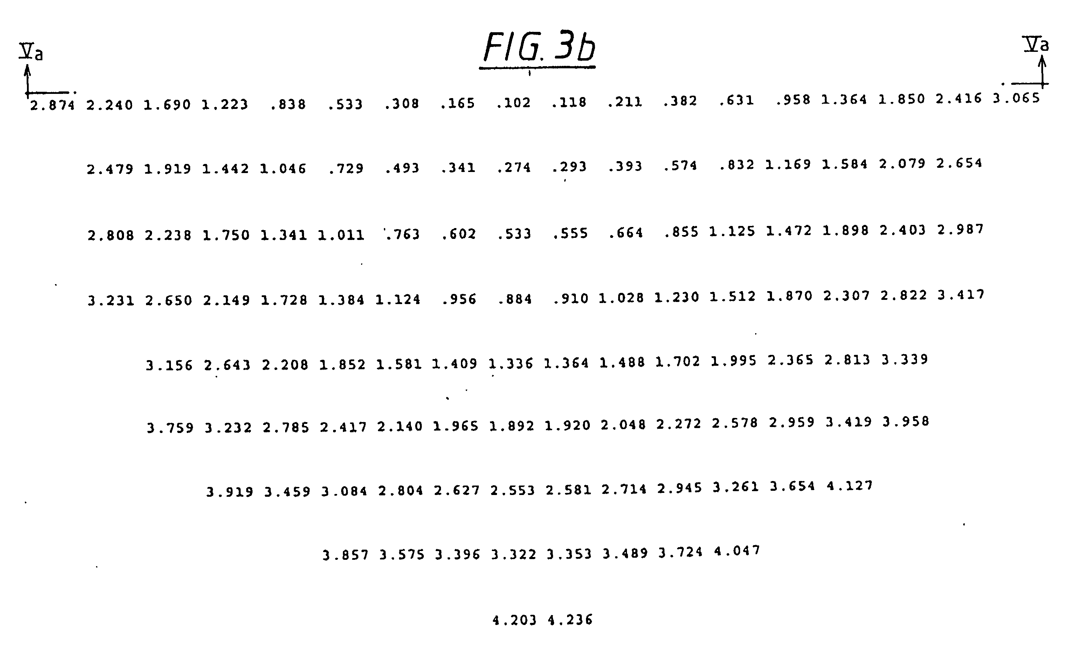

Figur 1 zeigt die astigmatischen Abweichungen, Fig. 2 die Zunahme der Wirkung vom Fernbezugspunkt ausgehend und Fig. 3 die Pfeilhöhen der Vorderfläche, welche die gleitende Wirkung erzeugt, in einem Raster von 3 zu 3 mm.

Die Gewißheit, daß mit der Erfüllung dieser Forderungen ein bestmöglicher Kompromiß für die große Mehrzahl der Brillenträger in diesem Wirkungsbereich gefunden wurde, erhält man aus Trageversuchen. Diese wurden hausintern durchgeführt und bestätigen das gewählte Design.

Selbstverständlich können die erfindungsgemäßen Gleitsichtlinsen in Silikat oder in organischem Material (z. B. CR39) mit den jeweils verfügbaren Brechzahlen berechnet und ausgeführt werden.

Je nach Herstellverfahren und wirtschaftlichen Überlegungen können die Vorder-, die Rückfläche oder beide Flächen der Gleitsichtlinse als Gleitsichtflächen ausgebildet werden.

Außerdem ist es selbstverständlich, daß entsprechende Gleitsichtlinsen für andere mittlere Gebrauchssituationen errechnet werden können.

## Patentansprüche

1. Multifokale Brillenlinse mit zwei optisch wirksamen Flächen, mit Wirkungen im Fernbezugspunkt von -4,0 dpt bis +4,0 dpt im absolut stärkeren Hauptschnitt (stH), mit Zylindern von 0,0 bis 4,0 dpt und einer Addition von 1,00 bis 3,00 dpt, mit mindestens einer asphärischen, mindestens zweimal stetig differenzierbaren und nicht achsensymmetrischen Gleitsichtfläche, die eine Fernsicht-, eine Nahsicht- und eine dazwischenliegende Progressionszone enthält, wobei in einem elliptischen Bereich mit einer Ausdehnung von 50 mm in der Horizontalen und einer Ausdehnung von 40 mm in der Vertikalen -gemessen von der Mitte des elliptischen Bereichs, die 4 mm senkrecht unterhalb eines Zentrierkreuzes, das die Brillenlinse aufweist, liegt, das die anzustrebende Positionierung der Brillenlinse relativ zum zu korrigierenden Auge angibt, derart, dass bei einem gerade aus blickenden Auge das Zentrierkreuz vor der Pupiltenmitte des Auges zu positionieren ist - folgende Merkmale zusammen erfüllt sind:

   - der Nahbezugspunkt ist höchstens 21 mm senkrecht unterhalb des Fembezugspunkts und vorzugsweise um 2,5 mm nasal versetzt,

   - der Fernbereich ist mit dem Nahbereich durch eine Hauptblicklinie verbunden, welche in Abhängigkeit von Fernteilwirkung und Addition eine mehr oder weniger zur Nase hin geschwungene Kurve bildet,

   - längs dieser Hauptblicklinie ist von der Fernsichtzone zur Nahsichtzone ein Progressionskanal ausgebildet, wobei der Progressionskanal die Hauptblicklinie enthält, in dem die astigmatische Abweichung weniger als 0,75 dpt beträgt,

   - dieser Progressionskanal hat in horizontaler Richtung eine von der Wirkung im stärkeren Hauptschnitt im Fembezugspunkt (stH) und von der Addition (ADD) abhängende Mindestbreite gemäss der folgenden Tabelle, wobei die Mindestbreiten in mm angegeben sind,

| stH/ADD | 1.0 | 1,25 | 1,50 | 1,75 | 2,00 | 2,25 | 2,50 | 2,75 | 3,0 |
|---------|-----|------|------|------|------|------|------|------|-----|
| -4,00 | 15,1 | 10,8 | 7,9 | 5,9 | 4,7 | 4,1 | 3,8 | 3,5 | 3,0 |
| -3,00 | 14,9 | 10,7 | 7,8 | 5,9 | 4,7 | 4,1 | 3,8 | 3,5 | 3,0 |
| -2,00 | 14,3 | 10,4 | 7,6 | 5,8 | 4,7 | 4,1 | 3,8 | 3,5 | 3,0 |
| -1,00 | 13,3 | 9,8 | 7,4 | 5,7 | 4,7 | 4,1 | 3,8 | 3,5 | 3,0 |
| .00 | 12,2 | 9,2 | 7,1 | 5,6 | 4,7 | 4,1 | 3,8 | 3,4 | 3,0 |
| +1,00 | 11.0 | 8,5 | 6,7 | 5,5 | 4,6 | 4,1 | 3,7 | 3,3 | 2,9 |
| +2,00 | 9,8 | 7,8 | 6,4 | 5,3 | 4,5 | 4,0 | 3,6 | 3,2 | 2,7 |
| +3,00 | 8,9 | 7,3 | 6,0 | 5,1 | 4,4 | 3,9 | 3,4 | 3,0 | 2,6 |
| +4,00 | 8,3 | 6,8 | 5,7 | 4,8 | 4,2 | 3,7 | 3,3 | 2,9 | 2,5 |

und

- unterhalb einer horizontalen Linie, an deren Schnittpunkt mit der Hauptblicklinie die Hälfte der Addition erreicht wird, ist die mittlere Wirkung mindestens um den in der folgenden Tabelle angegebenen Wert dW größer als die mittlere Wirkung im Fembezugspunkt:

| ADD in dpt | 1,00 | 1,25 | 1,50 | 1,75 | 2,00 | 2,25 | 2,50 | 2,75 | 3,00 |
| --- | --- | --- | --- | --- | --- | --- | --- | --- | --- |
| dW in dpt | 0,20 | 0,30 | 0,35 | 0,50 | 0,60 | 0,60 | 0,65 | 0,70 | 0,70 |

2. Multifokale Brillenlinse nach Anspruch 1, **dadurch gekennzeichnet, daß** das Zentrierkreuz senkrecht unterhalb des Fernbezugspunkts vorzugsweise im Abstand von 3 mm angebracht ist, daß auf einer Länge von maximal 11 mm die Wirkung in der Progressionszone im wesentlichen linear entlang der Hauptblicklinie um 75% der Addition ansteigend ist, daß die maximale astigmatische Abweichung Amax in dpt für ADD <= 1,50 dpt durch folgende Gleichung gegeben ist:

$$Amax <= (1{,}13 + 0{,}070* stH + 0{,}016* stH**2)* ADD$$

und daß die maximale astigmatische Abweichung Amax in dpt für ADD >= 1,75 dpt durch folgende Gleichung gegeben ist:

$$Amax <= (1{,}16 + 0{,}025* stH + 0{,}004* stH**2)* ADD.$$

3. Multifokale Brillenlinse nach Anspruch 1 oder 2, **dadurch gekennzeichnet, daß** in den bezüglich des binokularen Sehens korrespondierenden Punkten beiderseits der Hauptblicklinie annähernd gleiche Werte für die sphärische und astigmatische Abweichung erreicht sind.

4. Multifokale Brillenlinse nach Anspruch 1, 2 oder 3, **dadurch gekennzeichnet, daß** die prismatischen Wirkungen nasal und temporal der Hauptblicklinie in den bezüglich des binokularen Sehens korrespondierenden Durchblickstellen so gewählt sind, das die vertikalen Richtungsdifferenzen im direkten Sehen nicht größer sind als 0,5 cm/m.

5. Multifokale Brillenlinse nach einem oder mehreren der Ansprüche 1 bis 4, **dadurch gekennzeichnet, daß** im Fernsichtbereich für alle Punkte in einem Winkelbereich, in dem der um das Zentrierkreuz gemessene, in Grad gegenüber der Horizontalen angegebene Winkel Phi > 45-30/ADD ist, die astigmatische Abweichung kleiner als 0,5 dpt ist.

6. Multifokale Brillenlinse nach einem oder mehreren der Ansprüche 1 bis 5, **dadurch gekennzeichnet, daß** in der Progressionszone längs der Hauptblicklinie eine astigmatische Abweichung vorhanden ist, die im oberen Bereich der Progessionszone nahe bei Null dpt liegt und in deren weiteren Verlauf einen Wert von 0,50 dpt nicht übersteigt.

7. Multifokale Brillenlinse nach einem oder mehreren der Ansprüche 1 bis 6, **dadurch gekennzeichnet, daß** im Schnitt der Gleitsichtfläche mit Horizontalebenen im oberen Teil der Progressionszone Kurven vorhanden sind, deren Krümmungen bei objektseitiger Lage der Gleitsichtfläche, beginnend am Rand des Progressionskanals, zur Seite hin zunächst merklich zu- und dann wieder abnehmen, und daß bei augenseitiger Lage der Gleitsichtfläche die Krümmungen zunächst merklich ab und dann wieder zunehmend sind.

8. Multifokale Brillenlinse nach einem oder mehreren der Ansprüche 1 bis 7, **dadurch gekennzeichnet, daß** innerhalb eines Kreises um den Fernbezugspunkt mit 7 mm Durchmesser und innerhalb eines Kreises um den Nahbezugspunkt mit 4 mm Durchmesser der Astigmatismus eines beliebigen Strahls, der senkrecht zur augenseitigen Fläche der Gleitsichtlinse verläuft, um höchstens 0,11 + 0,02* ADD dpt vom Astigmatismus des entsprechend verlaufenden Meßstrahls durch den jeweiligen Bezugspunkt unterschiedlich ist.

9. Multifokale Brillenlinse nach einem oder mehreren der Ansprüche 1 bis 7, **dadurch gekennzeichnet, daß** innerhalb eines Kreises um den Fernbezugspunkt mit 7 mm Durchmesser und innerhalb eines Kreises um den Nahbezugspunkt mit 4 mm Durchmesser der Astigmatismus eines beliebigen Strahls, der senkrecht zur augenseitigen Fläche der Gleitsichtlinse verläuft, um höchstens 0,17 dpt vom Astigmatismus des entsprechend verlaufenden Meßstrahls durch den jeweiligen Bezugspunkt unterschiedlich ist.

**10.** Multifokale Brillenlinse nach einem oder mehreren der Ansprüche 1 bis 9, **dadurch gekennzeichnet, daß** 100 % der verlangten Addition in einem Punkt erreicht sind, der mindestens 1mm senkrecht oberhalb des Nahbezugspunktes liegt.

**Claims**

**1.** Multifocal spectacle lens having two optically active surfaces with effects at the far reference point of -4.0 dpt to +4.0 dpt in the absolutely stronger main section (stH), having cylinders of 0.0 to 4.0 dpt and an addition of 1.00 to 3.00 dpt, having at least one aspheric, at least twice continuously differentiable and non-axially symmetric continuous vision surface which includes a far vision zone, a near vision zone and a progression zone lying therebetween, the following features being fulfilled together in an elliptical region with a horizontal extent of 50 mm and a vertical extent of 40 mm - measured from the centre of the elliptical region - which lies 4 mm perpendicularly below a centering cross which the spectacle lens has and which specifies the positioning to be aimed at for the spectacle lens relative to the eye to be corrected in such a way that the centering cross is to be positioned in front of the eye pupil centre in the case of an eye looking straight ahead:

- the near reference point is offset at most 21 mm perpendicularly below the far reference point, and preferably by 2.5 mm in relation to the nose,
- the far region is connected to the near region by a principal line of sight which forms a curve swept more or less towards the nose as a function of the distance portion effect and addition,
- a progression channel is formed along this principal line of sight from the far vision zone to the near vision zone, the progression channel including the principal line of sight in which the astigmatic aberration is less than 0.75 dpt,
- in the horizontal direction, this progression channel has a minimum width dependent on the effect in the stronger main section at the far reference point (stH) and on the addition (ADD) in accordance with the following table, the minimum widths being specified in mm,

| stH/ADD | 1.0 | 1.25 | 1.50 | 1.75 | 2.00 | 2.25 | 2.50 | 2.75 | 3.00 |
|---|---|---|---|---|---|---|---|---|---|
| -4.00 | 15.1 | 10.8 | 7.9 | 5.9 | 4.7 | 4.1 | 3.8 | 3.5 | 3.0 |
| -3.00 | 14.9 | 10.7 | 7.8 | 5.9 | 4.7 | 4.1 | 3.8 | 3.5 | 3.0 |
| -2.00 | 14.3 | 10.4 | 7.6 | 5.8 | 4.7 | 4.1 | 3.8 | 3.5 | 3.0 |
| -1.00 | 13.3 | 9.8 | 7.4 | 5.7 | 4.7 | 4.1 | 3.8 | 3.5 | 3.0 |
| .00 | 12.2 | 9.2 | 7.1 | 5.6 | 4.7 | 4.1 | 3.8 | 3.4 | 3.0 |
| +1.00 | 11.0 | 8.5 | 6.7 | 5.5 | 4.6 | 4.1 | 3.7 | 3.3 | 2.9 |
| +2.00 | 9.8 | 7.8 | 6.4 | 5.3 | 4.5 | 4.0 | 3.6 | 3.2 | 2.7 |
| +3.00 | 8.9 | 7.3 | 6.0 | 5.1 | 4.4 | 3.9 | 3.4 | 3.0 | 2.6 |
| +4.00 | 8.3 | 6.8 | 5.7 | 4.8 | 4.2 | 3.7 | 3.3 | 2.9 | 2.5 |

and
- below a horizontal line on which half the addition is reached at its point of intersection with the principal line of sight, the average effect is greater than the average effect at the far reference point by at least the value dW specified in the following table:

| ADD in dpt | 1.00 | 1.25 | 1.50 | 1.75 | 2.00 | 2.25 | 2.50 | 2.75 | 3.00 |
|---|---|---|---|---|---|---|---|---|---|
| dW in dpt | 0.20 | 0.30 | 0.35 | 0.50 | 0.60 | 0.60 | 0.65 | 0.70 | 0.70 |

**2.** Multifocal spectacle lens according to Claim 1, **characterized in that** the centering cross is fitted perpendicularly below the far reference point, preferably at a distance of 3 mm, **in that** over a length of at most 11 mm the effect in the progression zone is an essentially linear one rising by 75% of the addition along the principal line of sight, **in that** the maximum astigmatic aberration Amax in dpt for ADD <= 1.50 dpt is given by the following equation:

$$Amax <= (1.13 + 0.070* stH + 0.016* stH**2)* ADD,$$

and **in that** the maximum astigmatic aberration Amax in dpt for ADD >= 1.75 dpt is given by the following equation:

$$Amax <= (1.16 + 0.025* stH + 0.004* stH**2)* ADD.$$

3. Multifocal spectacle lens according to Claim 1 or 2, **characterized in that** approximately equal values are achieved for the spherical and astigmatic aberration at the points, corresponding with reference to binocular vision, on both sides of the principal line of sight.

4. Multifocal spectacle lens according to Claim 1, 2 or 3, **characterized in that** on the nasal and temporal sides of the principal line of sight the prismatic effects are selected at the viewpoints corresponding with reference to binocular vision such that the vertical differences in direction for direct vision are not greater than 0.5 cm/m.

5. Multifocal spectacle lens according to one or more of Claims 1 to 4, **characterized in that** the astigmatic aberration is smaller than 0.5 dpt in the far vision region for all points in an angular range in which the angle Phi measured about the centering cross and specified in degrees with reference to the horizontal is > 45-30/ADD.

6. Multifocal spectacle lens according to one or more of Claims 1 to 5, **characterized in that** there is present in the progression zone along the principal line of sight an astigmatic aberration which is close to zero dpt in the upper region of the progression zone and does not exceed a value of 0.50 dpt in the further course thereof.

7. Multifocal spectacle lens according to one or more of Claims 1 to 6, **characterized in that** there are present in the section of the continuous vision surface with horizontal planes in the upper part of the progression zone curves whose curvatures firstly markedly increase and then decrease again to the side, starting at the edge of the progression channel, given the position of the continuous vision surface on the object side, and **in that** the curvatures are initially markedly decreasing and then increasing again given the position of the continuous vision surface on the eye side.

8. Multifocal spectacle lens according to one or more of Claims 1 to 7, **characterized in that** the astigmatism of an arbitrary ray which runs perpendicular to the surface of the continuous vision lens on the eye side differs by at most 0.11 + 0.02* ADD dpt from the astigmatism of the correspondingly running measuring ray through the respective reference point inside a circle around the far reference point with a diameter of 7 mm and inside a circle around the near reference point with a diameter of 4 mm.

9. Multifocal spectacle lens according to one or more of Claims 1 to 7, **characterized in that** the astigmatism of an arbitrary ray which runs perpendicular to the surface of the continuous vision lens on the eye side differs by at most 0.17 dpt from the astigmatism of the correspondingly running measuring ray through the respective reference point inside a circle around the far reference point with a diameter of 7 mm and inside a circle around the near reference point with a diameter of 4 mm.

10. Multifocal spectacle lens according to one or more of Claims 1 to 9, **characterized in that** 100% of the desired addition is achieved at a point which is at least 1 mm perpendicularly above the near reference point.

**Revendications**

1. Lentille de lunettes multifocale avec deux surfaces à correction optique, avec des corrections sur le point de référence en vision de loin de -4,0 dpt à +4,0 dpt dans la section principale plus épaisse en valeur absolue (stH), avec des cylindres de 0,0 à 4,0 dpt et une addition de 1,00 à 3,00 dpt, avec au moins une surface de vision progressive asphérique différentiable de manière continue au moins deux fois et non symétrique par rapport à l'axe, comportant une zone de vision de loin, une zone de vision de près et une zone de progression disposée entre les deux, les caractéristiques suivantes étant réalisées ensemble dans une zone elliptique d'une extension de 50 mm sur l'horizontale et de 40 mm sur la verticale - mesurée depuis le milieu de la zone elliptique située verticalement à 4 mm au-dessous d'une croix de centrage disposée sur la lentille de lunettes et indiquant le positionnement de la lentille de lunettes à rechercher par rapport à l'oeil à corriger afin que, dans le cas d'un oeil regardant droit devant lui, la croix de centrage soit à positionner en face du milieu de la pupille de l'oeil :

- le point de référence en vision de près est décalé au maximum de 21 mm verticalement en dessous du point de référence en vision de loin, et de préférence de 2,5 mm en direction du nez,
- la zone de vision de loin est reliée avec la zone de vision de près par une ligne visuelle principale qui forme une courbe plus ou moins incurvée en direction du nez en fonction de la correction de la vision de loin et de l'addition,
- un canal de progression est formé le long de cette ligne visuelle principale depuis la zone de vision de loin jusqu'à la zone de vision de près, le canal de progression contenant la ligne visuelle principale, dans lequel la déviation astigmatique est inférieure à 0,75 dpt,
- ce canal de progression a, dans la direction horizontale, une largeur minimale dépendant de la correction dans la section principale plus épaisse au point de référence en vision de loin (stH) et de l'addition (ADD) selon le tableau suivant, les largeurs minimales étant indiquées en mm,

| stH/ADD | 1.0 | 1,25 | 1,50 | 1,75 | 2,00 | 2,25 | 2,50 | 2,75 | 3,0 |
|---------|-----|------|------|------|------|------|------|------|-----|
| -4.00 | 15,1 | 10,8 | 7,9 | 5,9 | 4,7 | 4,1 | 3,8 | 3,5 | 3,0 |
| -3.00 | 14,9 | 10,7 | 7,8 | 5,9 | 4,7 | 4,1 | 3,8 | 3,5 | 3,0 |
| -2.00 | 14,3 | 10,4 | 7,6 | 5,8 | 4,7 | 4,1 | 3,8 | 3,5 | 3,0 |
| -1.00 | 13,3 | 9,8 | 7,4 | 5,7 | 4,7 | 4,1 | 3,8 | 3,5 | 3,0 |
| .00 | 12,2 | 9,2 | 7,1 | 5,6 | 4,7 | 4,1 | 3,8 | 3,4 | 3,0 |
| +1.00 | 11,0 | 8,5 | 6,7 | 5,5 | 4,6 | 4,1 | 3,7 | 3,3 | 2,9 |
| +2.00 | 9,8 | 7,8 | 6,4 | 5,3 | 4,5 | 4,0 | 3,6 | 3,2 | 2,7 |
| +3.00 | 8,9 | 7,3 | 6,0 | 5,1 | 4,4 | 3,9 | 3,4 | 3,0 | 2,6 |
| +4.00 | 8,3 | 6,8 | 5,7 | 4,8 | 4,2 | 3,7 | 3,3 | 2,9 | 2,5 |

et

- en dessous d'une ligne horizontale, au point d'intersection de celle-ci avec la ligne visuelle principale, point où s'obtient la moitié de l'addition, la correction moyenne est supérieure à la correction moyenne au point de référence en vision de loin d'au moins la valeur dW indiquée dans le tableau suivant

| ADD en dpt | 1,00 | 1,25 | 1,50 | 1,75 | 2,00 | 2,25 | 2,50 | 2,75 | 3,00 |
|------------|------|------|------|------|------|------|------|------|------|
| dW en dpt | 0,20 | 0,30 | 0,35 | 0,50 | 0,60 | 0,60 | 0,65 | 0,70 | 0,70 |

2. Lentille de lunettes multifocale selon la revendication 1, **caractérisée en ce que** la croix de centrage est disposée verticalement sous le point de référence en vision de loin, de préférence à une distance de 3 mm, **en ce que**, sur une longueur de 11 mm au maximum, la correction dans la zone de progression augmente de manière sensiblement linéaire de 75% de l'addition le long de la ligne visuelle principale, **en ce que** la déviation astigmatique maximale Amax, en dpt, est donnée, pour ADD <= 1,50 dpt, par l'équation suivante :

$$\text{Amax} <= (1{,}13 + 0{,}070* \text{stH} + 0{,}016* \text{stH}^{**}2)* \text{ADD}$$

et **en ce que** la déviation astigmatique maximale Amax, en dpt, est donnée, pour ADD >= 1,75 dpt, par l'équation suivante :

$$\text{Amax} <= (1{,}16 + 0{,}025_* \text{stH} + 0{,}004_* \text{stH}^{**}2)* \text{ADD}.$$

**3.** Lentille de lunettes multifocale selon la revendication 1 ou 2, **caractérisée en ce que** des valeurs approximativement identiques sont obtenues pour la déviation sphérique et la déviation astigmatique aux points correspondants pour la vision binoculaire de part et d'autre de la ligne visuelle principale.

**4.** Lentille de lunettes multifocale selon la revendication 1, 2 ou 3, **caractérisée en ce que** les corrections prismatiques nasale et temporale de la ligne visuelle principale pour les points où la vision passe à travers les lentilles et qui correspondent à la vision binoculaire sont choisis de sorte que les différences de direction verticales en vision directe ne soient pas supérieures à 0,5 cm/m.

**5.** Lentille de lunettes multifocale selon une ou plusieurs des revendications 1 à 4, **caractérisée en ce que**, dans la zone de vision de loin, pour tous les points d'une zone angulaire dans laquelle l'angle Phi, mesuré autour de la croix de centrage et indiqué en degrés par rapport à l'horizontale, est > à 45-30/ADD, la déviation astigmatique est inférieure à 0,5 dpt.

**6.** Lentille de lunettes multifocale selon une ou plusieurs des revendications 1 à 5, **caractérisée en ce qu'**une déviation astigmatique, qui se situe aux environs de zéro dpt dans la partie supérieure de la zone de progression et qui ne dépasse pas une valeur de 0,50 dpt dans la suite de son évolution, existe dans la zone de progression le long de la ligne visuelle principale.

**7.** Lentille de lunettes multifocale selon une ou plusieurs des revendications 1 à 6, **caractérisée en ce qu'**il existe, dans l'intersection de la surface de vision progressive avec des plans horizontaux, dans la partie supérieure de la zone de progression, des courbes dont les courbures, pour une position de la surface de vision progressive orientée vers l'objet, en partant du bord du canal de progression et en allant vers le côté, augmentent d'abord nettement, puis diminuent de nouveau, et **en ce que**, pour une position de la surface de vision progressive orientée vers l'oeil, les courbures diminuent d'abord nettement, puis augmentent de nouveau.

**8.** Lentille de lunettes multifocale selon une ou plusieurs des revendications 1 à 7, **caractérisée en ce que**, à l'intérieur d'un cercle d'un diamètre de 7 mm autour du point de référence en vision de loin, et à l'intérieur d'un cercle d'un diamètre de 4 mm autour du point de référence en vision de près, l'astigmatisme d'un rayon quelconque passant perpendiculairement par la surface de la lentille progressive du côté de l'oeil, est différent au maximum de 0,11 + 0,02* ADD dpt de l'astigmatisme du rayon de mesure passant de manière correspondante par le point de référence correspondant.

**9.** Lentille de lunettes multifocale selon une ou plusieurs des revendications 1 à 7, **caractérisée en ce que**, à l'intérieur d'un cercle d'un diamètre de 7 mm autour du point de référence en vision de loin, et à l'intérieur d'un cercle d'un diamètre de 4 mm autour du point de référence en vision de près, l'astigmatisme d'un rayon quelconque passant perpendiculairement par la surface de la lentille progressive du côté de l'oeil, est différent au maximum de 0,17 dpt de l'astigmatisme du rayon dé mesure passant de manière correspondante par le point de référence correspondant.

**10.** Lentille de lunettes multifocale selon une ou plusieurs des revendications 1 à 9, **caractérisée en ce que** 100% de l'addition demandée sont obtenus en un point qui se trouve au moins 1 mm verticalement au-dessus du point de référence en vision de près.

FIG.1

B$_F$

0.50

0.50

0.75

0.75

1.00

1.00

1.50

1.50

2.00

2.00

B$_N$

Sph = 0.0 dpt
ADD = 2.0 dpt

FIG.2

0.00

B$_F$

0.60

0.75

1.00

0.75

B$_N$

2.00

Sph = 0.0 dpt
ADD = 2.0 dpt

Sph = 0.0 dpt; ADD = 2.0 dpt

FIG. 3a

1.858 1.870

1.779 1.569 1.433 1.371 1.384 1.471 1.632 1.867

2.007 1.646 1.363 1.154 1.020 .959 .972 1.059 1.219 1.453 1.763 2.148

2.102 1.664 1.303 1.021 .813 .681 .621 .635 .722 .880 1.113 1.421 1.806 2.267

1.834 1.394 1.034 .752 .546 .415 .357 .371 .457 .615 .847 1.154 1.538 1.999

2.164 1.642 1.201 .839 .556 .351 .221 .164 .179 .264 .421 .653 .961 1.345 1.808 2.350

2.055 1.528 1.083 .719 .435 .229 .099 .042 .056 .142 .300 .533 .843 1.229 1.694 2.239

2.029 1.497 1.046 .677 .388 .179 .048 -.009 .005 .091 .250 .487 .800 1.191 1.661 2.212

2.715 2.091 1.550 1.092 .715 .420 .205 .069 .010 .025 .112 .276 .517 .837 1.234 1.711 2.269 2.910

Ⅴb

Ⅴb

EP 0 802 441 B1

## FIG. 3b

▽a                                     ▽a

```
2.874 2.240 1.690 1.223  .838  .533  .308  .165  .102  .118  .211  .382  .631  .958 1.364 1.850 2.416 3.065

      2.479 1.919 1.442 1.046  .729  .493  .341  .274  .293  .393  .574  .832 1.169 1.584 2.079 2.654

      2.808 2.238 1.750 1.341 1.011  .763  .602  .533  .555  .664  .855 1.125 1.472 1.898 2.403 2.987

      3.231 2.650 2.149 1.728 1.384 1.124  .956  .884  .910 1.028 1.230 1.512 1.870 2.307 2.822 3.417

            3.156 2.643 2.208 1.852 1.581 1.409 1.336 1.364 1.488 1.702 1.995 2.365 2.813 3.339

            3.759 3.232 2.785 2.417 2.140 1.965 1.892 1.920 2.048 2.272 2.578 2.959 3.419 3.958

                  3.919 3.459 3.084 2.804 2.627 2.553 2.581 2.714 2.945 3.261 3.654 4.127

                        3.857 3.575 3.396 3.322 3.353 3.489 3.724 4.047

                              4.203 4.236
```

FIG. 4

_FIG.5_

_FIG. 6_